Europäisches Patentamt

(19) European Patent Office

Office européen des brevets

(11) Numéro de publication : **0 038 940**
**B1**

(12) **FASCICULE DE BREVET EUROPÉEN**

(45) Date de publication du fascicule du brevet :
05.10.83

(21) Numéro de dépôt : 81102319.1

(22) Date de dépôt : 27.03.81

(51) Int. Cl.³ : **A 23 C 19/076, A 23 C 19/05**

(54) **Procédé de fabrication d'un fromage tartinable du genre crescenza.**

(30) Priorité : 25.04.80 CH 3192/80

(43) Date de publication de la demande :
04.11.81 Bulletin 81/44

(45) Mention de la délivrance du brevet :
05.10.83 Bulletin 83/40

(84) Etats contractants désignés :
**DE FR GB IT SE**

(56) Documents cités :
**FR A 2 187 209**
**FR A 2 190 370**
**FR A 2 377 769**
**FR E 73 083**
**US A 3 111 410**
**US A 3 297 451**
**US A 3 316 098**

**J.G. DAVIS « CHEESE, vol. III, 1976, Churchill
Livingstone Londres, GB pages 722, 755, 810**

(73) Titulaire : **SOCIETE DES PRODUITS NESTLE S.A.**
**Case postale 353**
**CH-1800 Vevey (CH)**

(72) Inventeur : **Sozzi, Tomaso**
**Chemin des Abeilles 6**
**CH-1010 Lausanne (CH)**

EP 0 038 940 B1

Jouve, 18, rue St-Denis, 75001 Paris, France

Procédé de fabrication d'un fromage tartinable du genre crescenza

La présente invention a pour objet un procédé de fabrication d'un fromage tartinable du genre « crescenza ».

La crescenza est un fromage frais typique de l'Italie du Nord, seul endroit où il soit fabriqué. Il présente une teneur en eau élevée, 55-60 %, et contient 50 % de matière grasse sur matière sèche. Sa pâte est homogène, crémeuse, brillante, lisse et tartinable. Elle ressemble au fromage fondu qui contient plus de 60 % de matière grasse sur matière sèche. Aucun sérum ne s'en sépare au stockage. Elle est riche en calcium. La crescenza a un goût typique, peu acide et pur. Tout autre goût prononcé, provenant surtout de contaminations par des microorganismes, est un défaut. Elle est fabriquée en moule de 2 kg environ, sans croûte. Sa pâte est friable à la fabrication et devient tartinable après environ 8 jours. Les médecins italiens la considèrent comme le fromage idéal pour les malades et les enfants parce qu'il ne contient pas de sels de fonte.

La crescenza traditionnelle s'obtient par une coagulation de type présure, c'est-à-dire une coagulation enzymatique, laquelle donne un caillé relativement dur. Cette coagulation est suffisamment rapide (1 heure à 1 heure et 1/2) pour que les ferments lactiques naturels ne puissent intervenir de façon déterminante ; ils n'agissent véritablement et n'acidifient le caillé que lors de la phase d'égouttage. Cet égouttage est lent (7 à 8 h). Après salage, on passe à la phase de maturation qui demande une durée de l'ordre de huit jours. A l'issue de ce long processus traditionnel, on obtient la crescenza qui, au réfrigérateur, se conserve au maximum huit jours.

Le procédé selon la présente invention doit permettre la fabrication de la crescenza à une échelle industrielle tout en augmentant considérablement son aptitude à la conservation.

A cet effet, il est caractérisé par le fait qu'à partir de lait, on forme un caillé par une coagulation de type lactique, à un pH compris entre 5 et 5,3, on égoutte le caillé obtenu jusqu'à une teneur en matières sèches comprise entre 30 et 50 %, on y ajoute du sel à raison de 0,5 à 1 % du poids total et enfin on laisse se poursuivre la maturation jusqu'à son terme.

C'est ainsi que, par une technique fromagère différente, on parvient à fabriquer à l'échelle industrielle un fromage qui présente toutes les caractéristiques de la crescenza traditionnelle mais qui peut se conserver au réfrigérateur pendant cinq à six mois au lieu de huit jours. En outre, ce fromage se révèle être encore plus tartinable que la crescenza traditionnelle. Enfin, sa teneur en eau peut dépasser 60 %, alors que ce pourcentage représente une limite critique pour la crescenza obtenue par la voie traditionnelle.

Pour mettre en œuvre le procédé selon la présente invention, on peut provoquer la coagulation de type lactique par acidification, soit par l'action de ferments lactiques tels que les Streptococcus thermophilus présents à l'état naturel ou ajoutés pour la circonstance, soit par addition d'un acide alimentaire tel que les acides citrique, malique, lactique ou chlorhydrique par exemple. La coagulation est relativement lente (3-4 h environ) et donne un caillé relativement mou. De préférence, le caillé est brassé pendant sa formation.

L'opération suivante, l'égouttage, peut être conduite par voie centrifuge ou par ultrafiltration, par exemple, et est poursuivie jusqu'à obtenir un produit ayant une teneur en matières sèches comprise entre 30 et 50 %. On ajoute ensuite du sel à raison de 0,5 à 1 % du poids total, puis on laisse le produit maturer, de préférence en pots, jusqu'à son terme, c'est-à-dire jusqu'à fin d'évolution. Cette phase terminale de maturation peut être menée aussi bien à température ambiante qu'à température du réfrigérateur.

On voit bien que, sur le plan fromager, le procédé selon l'invention s'oppose au procédé de fabrication de crescenza traditionnelle. Il présente plutôt des analogies avec la fabrication du petit-suisse, et c'est effectivement un produit du type « petit-suisse » qu'on obtient si on ne respecte pas impérativement les paramètres énoncés plus haut.

Ainsi, si la coagulation de type lactique intervient à un pH incorrect, par exemple entre 4,5 et 4,8, on obtient un genre de petit-suisse, plus ou moins salé selon la quantité de sel qu'on a ajoutée avant maturation.

Si la coagulation lactique intervient dans la bonne gamme de pH, entre 5 et 5,3, mais qu'on n'ajoute pas de sel avant maturation, le produit obtenu a une texture granuleuse désagréable.

La même texture granuleuse désagréable apparaît si la teneur en eau est insuffisante, quelle que soit par ailleurs la quantité de sel ajoutée.

Selon une forme d'exécution préférée du procédé selon l'invention, on coagule du lait entier ou demi-entier pasteurisé par addition de ferments Streptococcus termophilus, à raison de 1 %, ou par addition d'acide lactique. De préférence, et essentiellement pour des raisons de législation fromagère, on ajoute également de faibles quantités de présure, celle-ci n'intervenant pas de façon sensible dans le processus de coagulation ; le caillé se forme à un pH de l'ordre de 5,2 et on le brasse pendant sa formation. On procède alors à l'égouttage centrifuge jusqu'à une teneur en matières sèches comprise entre 30 et 50 %, puis on ajoute du sel, à raison de 0,5 à 1 % en poids total. Le produit obtenu est alors mis en pots, puis placé dans des réfrigérateurs, à quelques degrés centigrades, pendant 24 heures, temps pendant lequel se déroule et s'achève la maturation.

Comme indiqué en début d'exposé, la crescenza selon le présent procédé est plus facile à tartiner que la crescenza traditionnelle et, surtout, elle peut être conservée pendant cinq à six mois au réfrigérateur. Ce dernier point est dû au fait que la nouvelle technologie utilisée selon la présente invention permet de maîtriser la fermentation et d'éliminer les infections ou contaminations secondaires très néfastes pour la conservabilité des produits traditionnels. En outre, une contamination par des microorganismes pathogènes n'est plus à craindre. Enfin, comme indiqué également plus haut, alors qu'on ne peut descendre au-dessous d'une teneur en matière sèche de 40 % avec la crescenza traditionnelle, on peut descendre sans problème jusqu'à 30 % avec la crescenza selon le présent procédé.

Les exemples ci-après sont donnés à titre d'illustration. Les pourcentages sont exprimés en valeur pondérale.

Exemple 1

A du lait entier maintenu à la température de 40 °C, on ajoute 1 % de ferments lactiques, à savoir 1 % d'une culture de Streptococcus thermophilus de 3 h sur lait. On ajoute également de la présure de force 10 000. On laisse coaguler, sous léger brassage, à un pH égal à 5,1. La coagulation demande quatre heures. On égoutte alors le caillé obtenu dans une centrifugeuse jusqu'à obtenir une teneur en matières sèches de 40 %, puis on ajoute du sel de cuisine, à raison de 0,7 % du caillé égoutté. On met alors en pots, puis on place dans un réfrigérateur à environ 4 °C. Au bout de 24 heures, la maturation est terminée. Le fromage obtenu, une fois ramené à la température ambiante, ressemble par son aspect et ses propriétés à la crescenza. Simplement, il est plus facilement tartinable.

Exemple 2

On répète ce qui est décrit à l'exemple 1, à la différence que l'égouttage n'est poursuivi que jusqu'à une teneur en matières sèches de 30 %. Le fromage obtenu présente encore les caractéristiques de la crescenza ; il est plus aisément tartinable et plus léger.

Exemples comparatifs

a) On répète ce qui est décrit à l'exemple 1, mais en ajoutant une quantité plus importante de ferments lactiques, de manière à laisser la coagulation se développer à pH égal à 4,7. Le fromage obtenu n'a plus l'aspect d'une crescenza, mais ressemble plutôt à du petit-suisse. Par ailleurs, à la dégustation, il révèle une texture granuleuse désagréable.

b) On répète ce qui est décrit à l'exemple 1, sans toutefois ajouter du sel dans le caillé égoutté.
Bien que le pH de coagulation soit correct, le fromage obtenu ressemble au fromage de l'exemple comparatif précédent et présente, lui aussi, une texture granuleuse désagréable.

c) On répète ce qui est décrit à l'exemple 1, mais on égoutte jusqu'à une teneur en matières sèches de 60 %.
Le fromage obtenu présente, là encore, une texture granuleuse désagréable.

Exemple 3

On procède de la manière décrite à l'exemple 1, mais on réalise l'acidification du lait en continu. On acidifie le lait dans une cuve jusqu'à pH 5,1, puis on ajoute et on soutire la même quantité de lait pour conserver le pH à la valeur constante de 5,1 dans la cuve. L'acidification est stoppée par le refroidissement dans le réfrigérateur.

Exemple 4

On procède de la manière décrite à l'exemple 1, à l'exception du fait que l'on réalise l'acidification par addition d'acide lactique et que l'on ajoute 1 % de sel au lieu de 0,7 %. On obtient un produit qui présente la même texture, les mêmes qualités physiques, mais qui n'a pas le bouquet du produit de l'exemple 1. Il est simplement un peu plus salé.

Exemple 5

On procède de la manière décrite à l'exemple 1, à l'exception du fait que l'on n'acidifie avec la culture lactique que jusqu'à un pH de 5,8-6,0, que l'on termine l'acidification par addition d'acide lactique et que l'on ajoute 0,5 % de sel au lieu de 0,7 %. On obtient un produit qui présente le même aspect, la même texture et les mêmes propriétés physiques que les produits des exemples 1 à 4, mais dont le bouquet est nettement supérieur à celui de l'exemple 4. Son goût est simplement un peu moins salé que celui du produit de l'exemple 1.

Exemple 6

On procède de la manière décrite à l'exemple 1, mais au lieu d'égoutter le caillé dans une centrifugeuse, on sépare le petit-lait du caillé par ultrafiltration. On obtient un produit en tout point comparable à celui de l'exemple 1.

**Revendications**

1. Procédé de fabrication d'un fromage tartinable du genre crescenza, caractérisé par le fait qu'à partir de lait, on forme un caillé par une coagulation de type lactique, à un pH compris entre 5 et 5,3, on égoutte le caillé obtenu jusqu'à une teneur en matières sèches de 30-50 %, on y ajoute du sel à raison de 0,5 à 1 % du poids total et enfin on laisse se poursuivre la maturation jusqu'à son terme.

2. Procédé selon la revendication 1, caractérisé par le fait qu'on brasse le caillé pendant sa formation.

3. Procédé selon la revendication 1, caractérisé par le fait qu'on égoutte le caillé par égouttage centrifuge.

4. Procédé selon la revendication 1, caractérisé par le fait que la coagulation de type lactique est provoquée par des Streptococcus thermophilus.

5. Procédé selon la revendication 1, caractérisé par le fait qu'on met en pots avant maturation.

6. Procédé selon la revendication 1, caractérisé par le fait que, jusqu'à son terme, la maturation dure 24 heures au réfrigérateur, à quelques degrés centrigrades.

7. Fromage tartinable du genre crescenza obtenu par le procédé selon la revendication 1.

8. Fromage selon la revendication 7, caractérisé par une conservation de 5 à 6 mois au réfrigérateur, à quelques degrés centigrades.

## Claims

1. A process for the production of a spreadable cheese of the crescenza type, which comprises forming a curd from milk by lactic-type coagulation at a pH-value of from 5 to 5.3, draining the curd to a dry matter content of from 30 to 50 %, adding salt in an amount of from 0.5 to 1 % of the total weight and allowing ripening to continue until it is complete.

2. A process as claimed in Claim 1, wherein the curd is stirred during its formation.

3. A process as claimed in Claim 1, wherein the curd is drained by centrifugation.

4. A process as claimed in Claim 1, characterised in that the lactic coagulation is brought about by Streptococcus thermophilus.

5. A process as claimed in Claim 1, wherein the curd is placed in pots before ripening.

6. A process as claimed in Claim 1, up to its completion, ripening lasts 24 hours in a refrigerator at a few degrees Centigrade.

7. A spreadable cheese of the crescenza type obtained by the process claimed in Claim 1.

8. A cheese as claimed in Claim 7, characterised by a shelf life of 5 to 6 months in a refrigerator, at a few degrees centigrade.

## Ansprüche

1. Verfahren zur Herstellung eines Streichkäses von der Art Crescenza, dadurch gekennzeichnet, daß man ausgehend von Milch durch eine Koagulation vom Milchsäuretyp bei einem pH zwischen 5 und 5,3 ein Gerinnungsprodukt herstellt, das erhaltene Gerinnungsprodukt bis zu einem Trockenfeststoffgehalt von 30 bis 50 % abtropfen läßt, Salz in einer Menge von 0,5 bis 1 % des Gesamtgewichts hinzufügt und schließlich die Reifung zu Ende gehen läßt.

2. Verfahren nach Anspruch 1, dadurch gekennzeichnet, daß man das Gerinnungsprodukt während seiner Bildung rührt.

3. Verfahren nach Anspruch 1, dadurch gekennzeichnet, daß man das Abtropfen mit einer Abtropfzentrifuge vornimmt.

4. Verfahren nach Anspruch 1, dadurch gekennzeichnet, daß die Koagulation vom Milchsäuretyp mit Hilfe von Streptococcus thermophilus vorgenommen wird.

5. Verfahren nach Anspruch 1, dadurch gekennzeichnet, daß man das Produkt vor der Reifung in Behälter überführt.

6. Verfahren nach Anspruch 1, dadurch gekennzeichnet, daß die Reifung bis zum Ende im Kühlschrank bei einigen Grad Celsius 24 h dauert.

7. Streichkäse von der Art Crescenza, welcher durch das Verfahren nach Anspruch 1 erhalten worden ist.

8. Käse nach Anspruch 7, gekennzeichnet durch eine Aufbewahrungsmöglichkeit im Kühlschrank bei einigen Grad Celsius von 5 bis 6 Monaten.